# EUROPEAN PATENT SPECIFICATION

(11) **EP 3 252 064 B1**
(45) Date of publication and mention of the grant of the patent: **26.05.2021**
(21) Application number: 16803776.0
(22) Date of filing: 03.06.2016
(51) Int. Cl.: C07F 7/08, C07F 17/00, C08F 10/02, C08F 4/659, C08F 210/16, C08F 210/14, C08F 110/02

(54) **METALLOCENE COMPOUND**
METALLOCENVERBINDUNG
COMPOSÉ MÉTALLOCÈNE

(30) Priority: 05.06.2015 KR 20150080018; 02.06.2016 KR 20160069064
(43) Date of publication of application: 06.12.2017
(73) Proprietor: LG Chem, Ltd., Seoul 07336 (KR)
(72) Inventor: CHO, Kyung Jin, Daejeon 34122 (KR); LEE, Ki Soo, Daejeon 34122 (KR); LEE, Sung Min, Daejeon 34122 (KR); HONG, Bog Ki, Daejeon 34122 (KR); CHO, Min Seok, Daejeon 34122 (KR); KIM, Se Young, Daejeon 34122 (KR); HAN, Chang Woan, Daejeon 34122 (KR)
(74) Representative: Goddar, Heinz J.
(86) International application number: PCT/KR2016/005924
(87) International publication number: WO 2016/195423

(56) References cited:
- WO-A1-03/102042
- JP-A- H07 304 829
- KR-A- 20050 024 287
- KR-A- 20060 021 476
- KR-A- 20100 067 627
- KR-A- 20100 101 092
- KR-A- 20150 058 054
- US-A- 5 767 300
- US-A1- 2012 329 964

## Description

### [TECHNICAL FIELD]

The present disclosure relates to a novel metallocene compound.

### [BACKGROUND OF ART]

In the early 1990s, [Me₂Si(Me₄C₅)NtBu]TiCl₂ (Constrained-Geometry Catalyst, hereinafter abbreviated as CGC) was reported by Dow Co. (US Patent No. 5,064,802). The CGC is superior to commonly known metallocene catalysts in a copolymerization reaction of ethylene and alpha-olefin as follows: (1) At a high polymerization temperature, high activity is shown and a polymer having a high molecular weight is produced, and (2) the copolymerization ability of alpha-olefin having large steric hindrance such as 1-hexene and 1-octene is excellent. In addition, a variety of characteristics of CGC upon polymerization are becoming gradually known, and thus thorough research into synthesis of derivatives thereof to serve as a polymerization catalyst is ongoing in academic and industrial fields.

A Group 4 transition metal compound having one or two cyclopentadienyl groups as a ligand may be used as a catalyst for olefin polymerization by activating it with methylaluminoxane or a boron compound. Such catalyst shows unique characteristics that traditional Zeigler-Natta catalyst does not have.

That is, a polymer obtained by using such catalyst has a narrow molecular weight distribution and higher reactivity for a second monomer such as alpha-olefin or cycloolefin, and distribution of the second monomer in the polymer is even. Furthermore, it is possible to control the stereoselectivity of the polymer in the polymerization of alpha-olefin by changing the substituent of the cyclopentadienyl ligand in the metallocene catalyst, and it is easy to control the degree of copolymerization, the molecular weight, and the distribution of the second monomer upon copolymerization of ethylene and other olefins.

Meanwhile, since the metallocene catalyst is more expensive than Zeigler-Natta catalyst, it must have good activity for its economic value. If the metallocene catalyst has high reactivity for the second monomer, there is an advantage that a polymer including a large amount of the second monomer may be obtained by using only a small amount of the second monomer.

Many researchers have studied various catalysts, and as a result, have proved that a bridged catalyst generally has high reactivity for the second monomer. The bridged catalyst developed until now may be classified into three types according to the type of the bridge. The first type of the bridged catalyst is a catalyst of which two cyclopentadienyl ligands are connected to an alkylene dibridge by the reaction of an electrophile, such as an alkyl halide indene or fluorene. The second is a silicone-bridged catalyst of which the ligands are connected to --SiR2--, and the third is a methylene-bridged catalyst which is obtained by the reaction of fulvene, indene or fluorene.

However, very few catalysts have been practically applied in commercial factories from the catalysts mentioned above, and thus, preparation of catalysts showing more improved polymerization performance is still in demand. 11 KR 2015 0058054 A,

US 2012/0329964 A1 and US 5,767,300 disclose bridged metallocene compounds which are suitable for oliefin polymerization.

### [DETAILED DESCRIPTION OF THE INVENTION]

### [Technical Problem]

The present disclosure provides a metallocene compound which has excellent activity and is capable of producing an olefin-based polymer having a high molecular weight.

Particularly, the present disclosure provides a metallocene compound which maintains a high activity even in the presence of hydrogen because of its low hydrogen reactivity, and may polymerize an olefin-based polymer having a high molecular weight.

### [Technical Solution]

The present disclosure provides a metallocene compound represented by 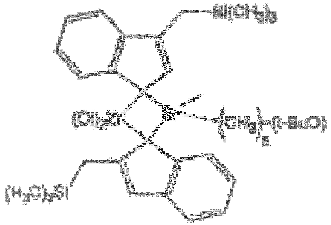 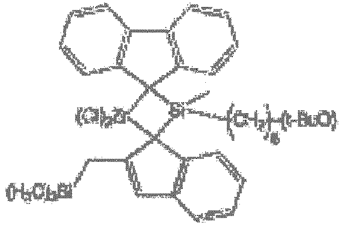 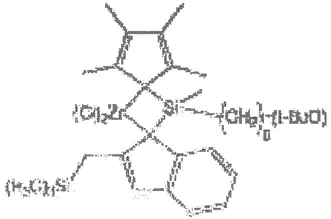 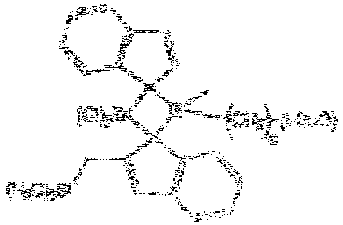 or

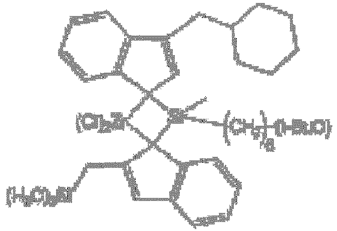

Further provided is a method of preparing an ethylene copolymer using the metlocene compound according to the present invention, wherein polymerization is carried out at a temperature of 25-500° C and at a pressure of 98.1 to 9810 kPa (1 to 100 kgf/cm²) for 1 to 24 hours, and wherein the ethylene copolymer is an ethylene-1-hexene copolymer,

### [ADVANTAGEOUS EFFECTS]

A metallocene compound according to the present disclosure may be used for the preparation of an olefin-based polymer, may have excellent activity, and may produce an olefin-based polymer having a relatively high molecular weight compared with the case of using a catalyst composition having a similar structure due to the structural and electrical steric hindrance effect.

Furthermore, the activity of the catalyst may be maintained for a long residence time in a reactor because of its long life time.

### [DETAILED DESCRIPTION OF THE EMBODIMENTS]

In the present disclosure, the terms "the first" . "the second", and the like are used to describe a variety of components, and these terms are merely employed to differentiate a certain component from other components.

Further, the terms used in this description are just for explaining exemplary embodiments and it is not intended to restrict the present disclosure. The singular expression may include the plural expression unless it is differently expressed contextually. It must be understood that the term "include" , "equip" , or "have" in the present description is only used for designating the existence of characteristics taken effect, numbers, steps, components, or combinations thereof, and do not exclude the existence or the possibility of addition of one or more different characteristics, numbers, steps, components of combinations thereof beforehand.

The present disclosure may be variously modified and have various forms, and specific examples of the present disclosure are explained in this description.

The metallocene compound according to the present disclosure may have excellent activity and may polymerize an olefin-based polymer having a high molecular weight.

Furthermore, the metallocene compound according to the present disclosure may polymerize an olefin-based polymer having a high molecular weight with still high activity because of its low hydrogen reactivity, even when the polymerization reaction is carried out in the presence of hydrogen in order to prepare an olefin-based polymer having a high molecular weight and a wide molecular weight distribution at the same time. Therefore, the metallocene compound may prepare an olefin-based polymer satisfying the high molecular characteristic without a decrease in activity even when the metallocene compound is heterogeneously used together with a catalyst having different characteristics, and thus the olefin-based polymer having a high molecular weight and a wide molecular weight distribution may be easily prepared.

According to an embodiment of the present disclosure, the metallocene compound may be obtained by connecting the indene derivative and the cyclopentadiene derivative with a bridge compound to prepare a ligand compound, and carrying out a metallation by adding a metal precursor compound, but is not limited to thereto.

More specifically, for example, after preparing a lithium salt by reacting the indene derivative with an organic lithium compound such as n-BuLi, a halogenated compound of a bridge compound is mixed therewith and then this mixture is reacted to prepare the ligand compound. After mixing the ligand compound or the lithium salt thereof and the metal precursor compound, and reacting them for about 12 to 24 hours until the reaction is completed, the reaction mixture may be filtered and dried under reduced pressure to obtain the metallocene compound.

A preparation method of the metallocene compound of the presenT disclosure is concretely explained in the following examples.

In the mean time, the present disclosure also provides a method of preparing an olefin copolymer using the metallocene compound.

The metallocene compound may be used in the preparation of the polyolefin polymer, alone or in combination with a cocatalyst as a catalyst composition. For example, an olefin homopolymer or an olefin copolymer may be provided by contacting the catalyst composition including the metallocene compound represented by the Chemical formula 1 with an olefin-based monomer to carry out a polymerization process.

The catalyst composition may further include one or more of cocatalyst compounds represented by the following Chemical Formula 3, Chemical Formula 4, and Chemical Formula 5, in addition to the metallocene compound:

[Chemical Formula 3] -[Al(R₅₀)-O]ₘ-

in Chemical Formula 3,
R₅₀ may be the same as or different from each other, and each independently halogen; C1 to C20 hydrocarbon; or C1 to C20 halogen-substituted hydrocarbon; and
m is an integer of 2 or more;

[Chemical Formula 4] J(R₅₁)₃

in Chemical Formula 4,
R₅ₗ may be the same as defined in Chemical Formula 3; and
J is aluminum or boron;

[Chemical Formula 5] [E-H]⁺[ZA₄]⁻ or [E]⁺[*ZA*₄]⁻

in Chemical Formula 5,
E is a neutral or cationic Lewis base;
H is a hydrogen atom;
Z is a Group 13 element; and
A may be the same as or different from each other, and each independently a C6 to C20 aryl group or a C1 to C20 alkyl group, of which one or more hydrogen atoms are substituted or unsubstituted with halogen, C1 to C20 hydrocarbon, alkoxy, or phenoxy.

Examples of the compound represented by Chemical Formula 3 may include methylaluminoxane, ethylaluminoxane, isobutylaluminoxane, butylaluminoxane or the like, and a more preferred compound may be methylaluminoxane.

Examples of the compound represented by Chemical Formula 4 may include trimethylaluminum, triethylaluminum, triisobutylaluminum, tripropylaluminum, tributylaluminum, dimethylchloroaluminum, triisopropylaluminum, tri-s-butyl-aluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminure, dimethylaluminummethoxide, dimethylaluminumethoxide, trimethylboron, triethylboron, triisobutylboron, tripropylboron, tributylboron or the like, and a more preferred compound may be selected from trimethylaluminum, triethylaluminum, and triisobutylaluminum.

Examples of the compound represented by Chemical Formula 5 may include triethylammonium tetraphenylboron, tributylammonium tetraphenylboron, trimethylammonium tetraphenylboron, tripropylammonium tetraphenylboron, trimethylammonium tetra(p-tolyl)boron, trimethylammonium tetra(o,p-dimethylphenyl)boron, tributylammonium tetra(p-trifluoromethylphenyl)boron, trimethylammonium tetra(p-trifluoromethylphenyl)boron, tributylammonium tetrapentafluorophenylboron, N,N-diethylanilinium tetraphenylboron, N,N-diethylani1inium tetrapentafluorophenylboron, diethylammonium tetrapentafluorophenylboron, triphenylphosphonium tetraphenylboron, trimethylphosphonium tetraphenylboron, triethylammonium tetraphenylaluminum, tributylammonium tetraphenylaluminum, trimethylammonium tetraphenylaluminum, tripropylammonium tetraphenylaluminum, trimethylammonium tetra(p-tolyl)aluminum, tripropylammonium tetra(p-tolyl)aluminum, triethylammonium tetra(o,p-dimethylphenyl)aluminum, tributylammonium tetra(p-trifluoromethylphenyl)aluminum, trimethylammonium tetra(p-trifluoromethylphenyl)aluminum, tributylammonium tetrapentafluorophenylaluminum, N,N-diethylanilinium tetraphenylaluminum, N,N~diethylani1inium tetrapentafluorophenylaluminum, diethylammonium tetrapentatetraphenylaluminum, triphenylphosphonium tetraphenylaluminum, trimethylphosphonium tetraphenylaluminum, tripropylammonium tetra(p-tolyl)boron, triethylammonium tetra(o,p-dimethylphenyl)boron, tributylammonium tetra(p-trifluoromethylphenyl)boron, triphenylcarboniumtetra(p-trifluoromethylphenyl)boron, triphenylcarboniumtetrapentafluorophenylboron, etc.

Alumoxane may be preferably used, and methylalumoxane (M0) which is an alkyl alumoxane may be more preferably used.

The catalyst composition may be prepared by a first method including the steps of 1) contacting the metallocene with the compound represented by Chemical Formula 3 or Chemical Formula 4 to obtain a mixture; and 2) adding the compound represented by Chemical Formula 5 to the mixture.

Further, the catalyst composition may be prepared by a second method of contacting the metallocene with the compound represented by Chemical Formula 3.

As a reaction solvent used upon preparation of the catalyst composition, a hydrocarbon solvent such as pentane, hexane, heptane, etc., or an aromatic solvent such as benzene, toluene, etc., may be used.

An olefin-based polymer may be prepared by polymerizing olefin-based monomers in the presence of the catalyst composition including the metallocene compound.

The polymerization reaction may be carried out according to a solution polymerization process, a slurry process, or a gas phase process by using a continuous slurry polymerization reactor, a loop slurry reactor, a gas phase reactor, or a solution reactor. Furthermore, the reaction may be a homopolymerization of an olefin-based monomer or copolymerization of two or more monomers.

The polymerization of the olefin-based monomer may be carried out at a temperature of about 25 to about 500°C and at a pressure of about 1 to about 100 kgf/cm² for about 1 to about 24 hours. Specifically, the polymerization of the olefin-based monomer may be carried out at a temperature of about 25 to about 500 t:, preferably about 25 to about 200 °C, and more preferably, about 50 to about 100°C. Furthermore, the reaction pressure may be about 1 to about 100 kgf/cm², preferably about 1 to about 50 kgf/cm², and more preferably about 5 to about 40 kgf/cm².

Specific example of the olefin-based monomer may include ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicosene or the like, and the olefin-based monomer may be a copolymer prepared by copolymerizing two or more of the monomers.

The olefin-based polymer may be a polyethylene polymer, but is not limited to thereto.

If the olefin-based polymer is a copolymer of ethylene/alpha-olefin, the content of a comonomer, alpha-olefin is not particularly limited, and it may be adequately selected according to the use or purpose of the olefin-based polymer. More specifically, the content may be more than 0 mole% and 99 mole% or less.

The olefin-based polymer prepared by the method may exhibit a high molecular weight compared with the case of using an organometallic compound having a similar structure as a catalyst.

According to an embodiment of the present disclosure, a weight average molecular weight (Mw) of the olefin-based polymer may be about 100,000 to about 1,000,000 g/mol, more preferably about 100,000 to about 600,000 g/mol.

Further, a molecular weight distribution (Mw/Mn, PDI) of the olefin-based polymer may be about 1 to about 10, more preferably about 3 to about 6.

Therefore, the olefin-based polymer according to the present disclosure shows a high molecular weight, thereby being applied to a variety of fields according to its use.

Hereinafter, the preferred Examples are provided for better understanding. However, these Examples are for illustrative purposes only, and the invention is not intended to be limited by these Examples.

### <EXAMPLES>

### <Preparation Example of Metallocene Compound>

### Preparation Example 1: Synthesis of ((1H-inden-2-yl)methyl)trimethylsilane

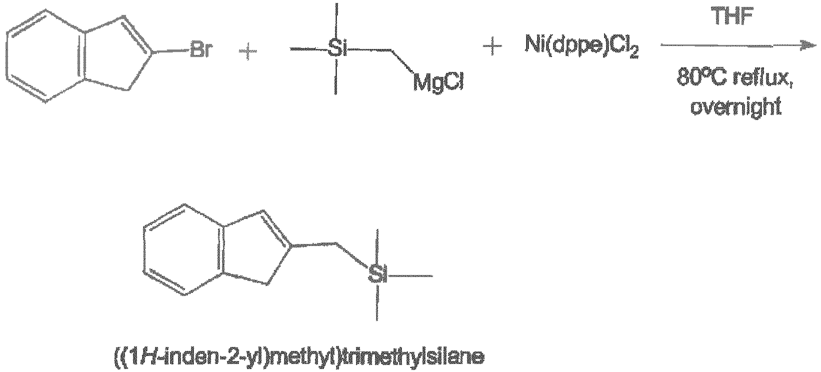

3.7 ml (30 mmol) of 2-Bromo-1H-indene was added to a flask, and Ar bubbling was performed for about 5 minutes while stirring in the presence of 100 ml of THF to remove dissolved gas. Under Ar bubbling, 0.8 g (1.5 mmol) of Ni(dppe)CI₂ was rapidly added and 30 ml (30 mmol) of 1.0 M ((Trimethylsilyl)methyl)magnesium chloride dissolved in diethyl ether at room temperature was slowly added dropwise. And then, the reaction was continued overnight while refluxing under Ar condition at 80 °C. (dppe=1,2-Bis(diphenylphosphino)ethane)
50 mL of water was added thereto, and the organic layer was extracted three times with 50 mL of diethylether. An appropriate amount of MgS0₄ was added to the collected organic layer, stirred for a while, filtered, and the solvent was dried under reduced pressure.

The resulting product was confirmed by ^-NMR.
li-NMR (500MHz, CDCl₃): 0.03 (9H. s), 3.25 (2H, s), 6.3(1H, s), 7.02-7.32 (4H, m)

### Example 1-1: Synthesis of Ligand Compound

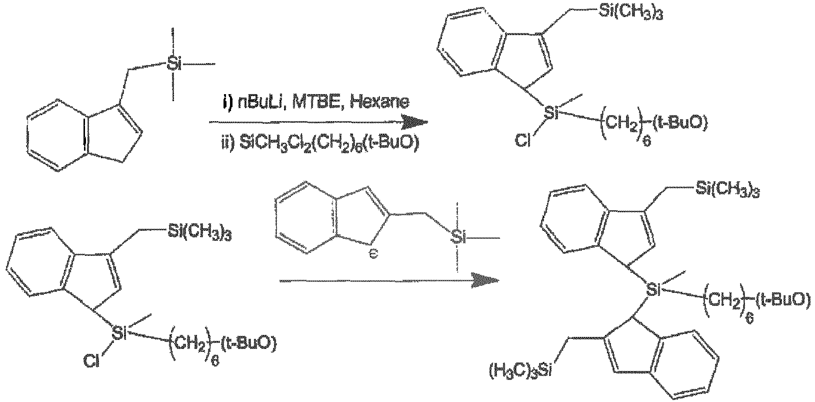

After dissolving 1.01 g (5 mmol) of ((1H-inden-3-yl)methyl)trimethylsilane in 80 ml of Hexane and 2.4 ml of MTBE, 2.4 mL (6 mmol) of a 2.50 M n-BuLi hexane solution was added thereto dropwise in a dry ice/acetone bath. The reaction mixture was slowly warmed up to room temperature, and then stirred for 24 hours, followed by addition of 50 ml of Hexane.

Another 250 mL Schlenk flask was placed in the glove box and weighed 1.36 g (5 mmol) of SiCH₃Cl₂(CH₂)₆(t-BuO) in the glove box. Then, it was taken out of the glove box, dissolved in 50 mL of Hexane, and then the mixture prepared above was added thereto dropwise in a dry ice/acetone bath (Synthesized Compound 1-1).

Separately, after dissolving 1.01 g (5 mmol) of ((1H-inden-2-yl)methyl)trimethylsilane of the Preparation Example 1 in 50 ml of THF, 2.4 mL (6 mmol) of a 2.50 M n-BuLi Hexane solution was added thereto dropwise in a dry ice/acetone bath. The reaction mixture was slowly warmed up to room temperature, and then stirred for 24 hours, followed by addition of 50 ml of Hexane (Synthesized Compound 1-2).

After the Synthesized Composition 1-2 was added to the Synthesized Composition 1-1 dropwise in a dry ice/acetone bath, the reaction mixture was slowly warmed up to room temperature, and then stirred for 24 hours.

50 mL of water was added thereto, and the organic layer was extracted three times with 50 mL of ether. An appropriate amount of MgSO₄ was added to the collected organic layer, stirred for a while, filtered, and the solvent was dried under reduced pressure to obtain 3.02 g (5 mmol) of a ligand compound in an oil phase, which was confirmed by ¹H-NMR.

The obtained ligand compound was used for the preparation of the metallocene compound.
¹H NMR (500MHz, CDCl₃): -0.38 (3H, s), 0.02 (18H, s), 1.17 (9H, m), 1.16 (9H, s), 0.41-1.52 (10H, m), 1.96 (2H, s), 2.04 (2H, m), 2.4 (1H, m), 3.23 (2H, m), 3.5 (1H, m), 6.02 (1H, m), 6.30 (1H, m). 7.0-7.46 (8H, m)

### Example 1-2: Synthesis of Metallocene Compound

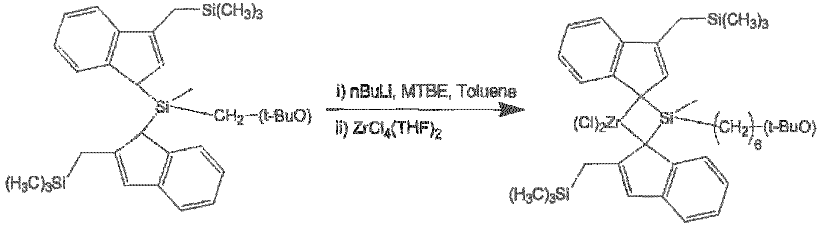

After dissolving 3.02 g (4.7 mmol) of the ligand compound synthesized in Example 1-1 in 80 mL of toluene and 2.6 mL of MTBE in a 250 mL Schlenk flask which is dried in an oven, 4.4 mL (11 mmol) of a 2.5 M n-BuLi Hexane solution was added thereto dropwise in a dry ice/acetone bath. The reaction mixture was slowly warmed up to room temperature, and then stirred for 24 hours, followed by lithiation.

1.88 g (5 mmol) of ZrCl₄(THF)₂ was taken in a glove box and injected into another 250 mL Schlenk flask to prepare a suspension having 80 mL of toluene. The above two flasks were cooled down to -78 °C and the lithiated ligand compound was slowly added to the toluene suspension of ZrCl4(THF)Z. After the completion of the injection, the reaction mixture was slowly warmed up to room temperature, stirred for one day and subjected to reaction. Then, toluene in the mixture was removed up to a volume of about % through vacuum-reduced pressure. Hexane was added in about 5 times volume of the remaining toluene thereto and recrystallized. The mixture was filtered without contacting with the outside air to give a metallocene compound. The resulting filter cake in the upper portion of the filter was washed using a little Hexane, and then weighed in the glove box to identify the synthesis and yield (yield: 97%).

The resulting product was stored in a toluene solution.
¹H NMR (500MHz, CDCl₃): -0.1 (18H, m), 1.17 (9H, m), 1.49 (3H, s), 0.84-2.21 (10H, m), 1.84 (2H, s), 2.34 (2H, s), 3.32 (2H, m), 5.62 (2H, d), 6.5-7.6 (8H, m)

### Example 2-1: Synthesis of Ligand Compound

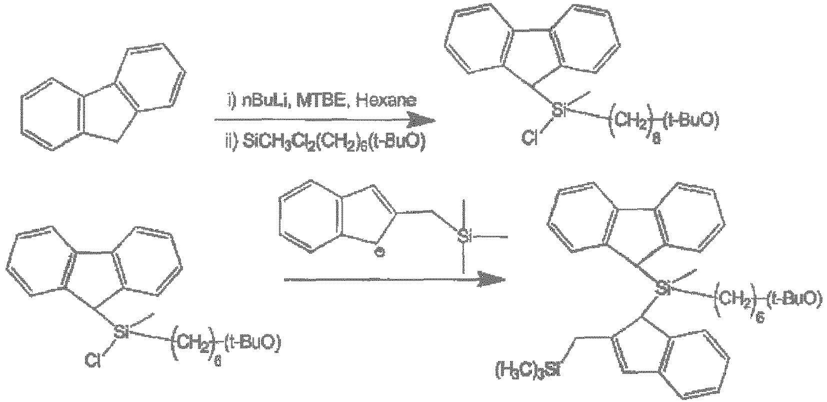

After dissolving 1 g (6 mmol) of fluorene in 60 ml of Hexane and 2.4 ml of MTBE, 2.9 mL (7.2 mmol) of a 2.50 M n-BuLi Hexane solution was added thereto dropwise in a dry ice/acetone bath. The reaction mixture was slowly warmed up to room temperature, and then stirred for 24 hours.

Another 250 mL Schlenk flask was placed in the glove box and weighed 1.62 g (6 mmol) of SiCH₃Cl₂(CH₂)₆(t-BuO) in the glove box. And it was taken out of the glove box, dissolved in 50 mL of Hexane, and then the mixture prepared above was added thereto dropwise in a dry ice/acetone bath (Synthesized Compound 2-1).

Separately, after dissolving 1.21 g (6 mmol) of ((1H-inden-2-yl)methyl)trimethylsilane of the Preparation Example 1 in 80 ml of THF, 2.9 mL (7.2 mmol) of a 2.50 M n-BuLi Hexane solution was added thereto dropwise in a dry ice/acetone bath. The reaction mixture was slowly warmed up to room temperature, and then stirred for 24 hours. And, a portion was sampled, dried, and then sampled for NMR in a glove box to identify the progress and completion of the reaction(Synthesized Compound 2-2).
¹H NMR (500MHz, C₆D₆): -0.01 (3H, s), 1.12 (9H, m), 1.03-1.46 (10H, m), 3.17 (2H, t), 3.87 (1H, s), 7.15-7.78 (8H, m)

After the Synthesized Composition 2-2 was added to the Synthesized Composition 2-1 dropwise in a dry ice/acetone bath, the reaction mixture was slowly warmed up to room temperature, and then stirred for 24 hours.

50 mL of water was added thereto, and the organic layer was extracted three times with 50 mL of ether. An appropriate amount of MgSO₄ was added to the collected organic layer, stirred for a while, filtered, and the solvent was dried under reduced pressure to obtain 3.36 g (5.9 mmol) of a ligand compound in an oil phase, which was confirmed by ¹H-NMR.

The obtained ligand compound was used for the preparation of the metallocene compound.
¹H NMR (500MHz, CDCl₃): -0.01 (3H, d), 1.16 (9H, m), 0.79-1.31 (10H, m), 1.57 (2H, s), 1.96 (1H, s), 3.25 (2H, m), 4.08 (1H, s), 6.34 (1H, d), 7.03-7.87 (12H, m)

### Example 2-2: Synthesis of Metallocene Compound

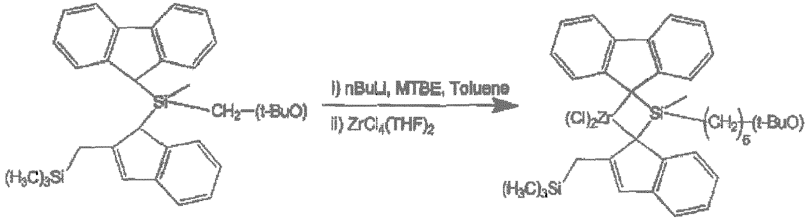

After dissolving 3.36 g (5.9 mmol) of the ligand compound synthesized in Example 2-1 in 80 mL of toluene and 2.6 mL of MTBE in a 250 mL Schlenk flask which is dried in an oven, 5.2 mL (13 mmol) of a 2.5 M n-BuLi Hexane solution was added thereto dropwise in a dry ice/acetone bath. The reaction mixture was slowly warmed up to room temperature, and then stirred for 24 hours, followed by lithiation.

2.23 g (5.9 mmol) of ZrCl₄(THF)₂ was taken in a glove box and injected into another 250 mL Schlenk flask to prepare a suspension having 80 mL of toluene. The above two flasks were cooled down to -78 TC and the lithiated ligand compound was slowly added to the toluene suspension of ZrCI4(THF)2. After the completion of the injection, the reaction mixture was slowly warmed up to room temperature, stirred for one day and subjected to reaction. Then, toluene in the mixture was removed up to a volume of about % through vacuum-reduced pressure. Hexane was added in about 5 times volume of the remaining toluene thereto and recrystallized. The mixture was filtered without contacting with the outside air to give a metallocene compound in a brown powder phase. The resulting filter cake in the upper portion of the filter was washed using a little Hexane, and then weighed in the glove box to identify the synthesis and yield (yield: 82%).
¹H NMR (500MHz, CDCl₃): -0.15 (9H, s), 1.3 (9H, m), 1.8 (3H, m), 0.9-1.8 (10H, m), 2.3 (2H, d), 3.4 (2H, m), 5.6 (1H, s), 6.5-8.0 (12H, m)

### Example 3-1: Synthesis of Ligand Compound

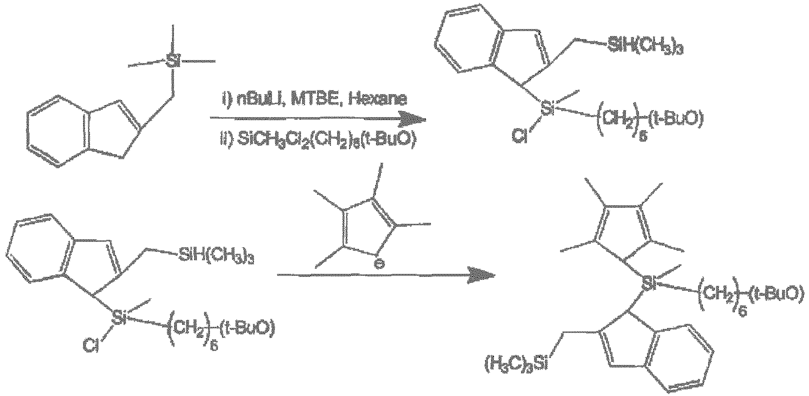

After dissolving 1.01 g (5 mmol) of ((1H-inden-2-yl)methyl)trimethylsilane of the Preparation Example 1 in 80 ml of THF, 2.4 mL (6 mmol) of a 2.50 M n-BuLi Hexane solution was added thereto dropwise in a dry ice/acetone bath. The reaction mixture was slowly warmed up to room temperature, and then stirred for 24 hours, followed by addition of 50 ml of Hexane.

Another 250 mL Schlenk flask was placed in the glove box and weighed 1.36 g (5 mmol) of SiCH₃Cl₂(CH₂)₆(t-BuO) in the glove box. And it was taken out of the glove box, dissolved in 50 mL of Hexane, and then the mixture prepared above was added thereto dropwise in a dry ice/acetone bath(Synthesized Compound 3-1).

Separately, after dissolving 0.61 g (5 mmol) of 1,2,3,4-tetramethylcyclopenta-1,3-diene in 80 ml of THF, 2.4 mL (6 mmol) of a 2.50 M n-BuLi Hexane solution was added thereto dropwise in a dry ice/acetone bath. The reaction mixture was slowly warmed up to room temperature- and then stirred for 24 hours (Synthesized Compound 3-2).

After the Synthesized Composition 3-2 was added to the Synthesized Composition 3-1 dropwise in a dry ice/acetone bath, the reaction mixture was slowly warmed up to room temperature, and then stirred for 24 hours.

50 mL of water was added thereto, and the organic layer was extracted three times with 50 mL of ether. An appropriate amount of MgSO₄ was added to the collected organic layer, stirred for a while, filtered, and the solvent was dried under reduced pressure to obtain 2.07 g (3.96 mmol) of a ligand compound in an oil phase, which was confirmed by ¹H-NMR.

The obtained ligand compound was used for the preparation of the metallocene compound.
¹H NMR (500MHz, CDCl₃): -0.21 (3H, s), -0.01 (9H, m), 0.04 (12H, m). 1.16 (9H, m), 0.9-1.54 (10H, m), 2.09 (2H, d), 3.30 (2H, m). 4.19 (1H, d), 4.52 (1H, d). 6.41 (1H, m), 7.0-7.33 (4H, m)

### Example 3-2: Synthesis of Metallocene Compound

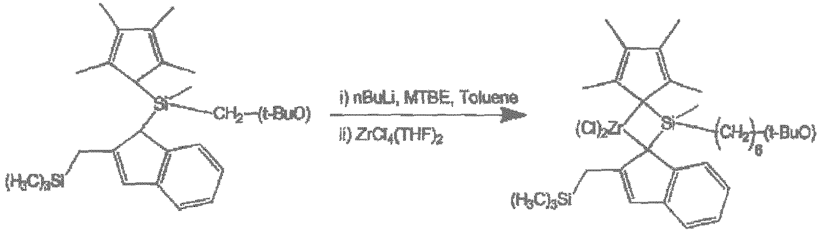

After dissolving 2.07 g (3.96 mmol) of the ligand compound synthesized in Example 3-1 in 80 mL of toluene and 2.6 mL of MTBE in a 250 mL Schlenk flask which is dried in an oven, 3.5 mL (8.7 mmol) of a 2.5 M n-BuLi Hexane solution was added thereto dropwise in a dry ice/acetone bath. The reaction mixture was slowly warmed up to room temperature, and then stirred for 24 hours, followed by lithiation.

1.49 g (3.96 mmol) of ZrCl₄(THF)₂ was taken in a glove box and injected into another 250 mL Schlenk flask to prepare a suspension having 80 mL of toluene. The above two flasks were cooled down to -78°C and the lithiated ligand compound was slowly added to the toluene suspension of ZrCl4(THF)₂. After the completion of the injection, the reaction mixture was slowly warmed up to room temperature, stirred for one day and subjected to reaction. Then, toluene in the mixture was removed up to a volume of about % through vacuum-reduced pressure. Hexane was added in about 5 times volume of the remaining toluene thereto and recrystallized. The mixture was filtered without contacting with the outside air to give a metallocene compound. The resulting filter cake in the upper portion of the filter was washed using a little Hexane, and then weighed in the glove box to identify the synthesis and yield (yield: 70%).

The resulting product was stored in a toluene solution.
^{l}H :\1IR (500MHz, CDCl₃): -0.32 (3H, s), 0.01 (12H, s). 0.07 (9H, s), 1.16 (9H, s), 0.8-1.5 (10H, m), 1.38 (2H, s), 3.23 (2H, s). 4.19 (1H, d), 4.5 (1H, d), 6.4 (2H, m). 6.96-7.33 (4H, m)

### Example 4-1: Synthesis of Ligand Compound

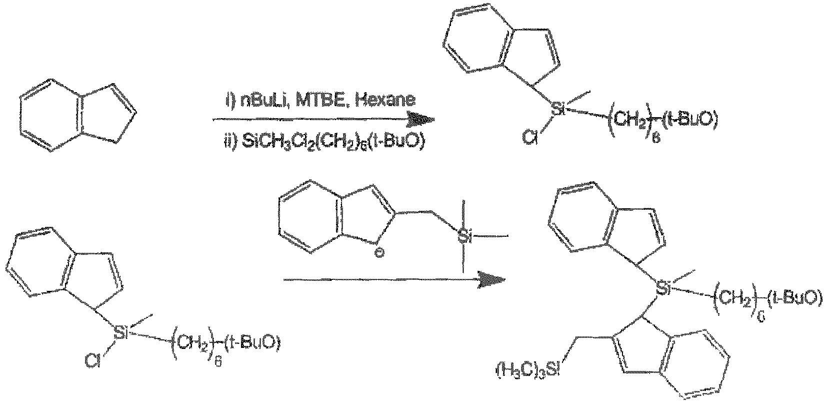

After dissolving 0.58 g (5 mmol) of Indene in 100 ml of Hexane and 3.0 ml of MTBE, 2.4 mL (6 mmol) of a 2.50 M n-BuLi Hexane solution was added thereto dropwise in a dry ice/acetone bath. The reaction mixture was slowly warmed up to room temperature, and then stirred for 24 hours.

Another 250 wL Schlenk flask was placed in the glove box and weighed 1.36 g (5 mmol) of SiCH₃Cl₂(CH₂)₆(t-BuO) in the glove box. And it was taken out of the glove box, dissolved in 100 mL of Hexane, and then the mixture prepared above was added thereto dropwise in a dry ice/acetone bath (Synthesized Compound 4-1),

Separately, after dissolving 1.01 g (5 mmol) of ((1H-inden-2-yl)methyl)trimethylsilane of the Preparation Example 1 in 100 ml of THF, 2.4 mL (6 mmol) of a 2.50 M n-BuLi Hexane solution was added thereto dropwise in a dry ice/acetone bath. The reaction mixture was slowly warmed up to room temperature, and then stirred for 24 hours. And, a portion was sampled, dried, and then sampled for NMR in a glove box to identify the progress and completion of the reaction (Synthesized Compound 4-2),

After the Synthesized Composition 4-2 was added to the Synthesized Composition 4-1 dropwise in a dry ice/acetone bath, the reaction mixture was slowly warmed up to room temperature, and then stirred for 24 hours.

50 mL of water was added thereto, and the organic layer was extracted three times with 50 mL of ether. An appropriate amount of MgSO₄ was added to the collected organic layer, stirred for a while, filtered, and the solvent was dried under reduced pressure to obtain 2.6 g (5 mmol) of a ligand compound in an oil phase, which was confirmed by ¹H-NMR.

The obtained ligand compound was used for the preparation of the metallocene compound.
¹H NMR (50OMHz, CDCl₃): -0.04 (3H, d), 0.04 (9H, s), 1.1 (9H, s), 0.8-1.8 (20H, m). 2.02 (2H, s), 2.15 (1H, s), 3.05 (1H, s), 3.26 (1H, s), 3.57 (2H, m), 6.2-6.36 (3H, m), 7.03-7.46 (8H, m)

### Example 4-2: Synthesis of Metallocene Compound

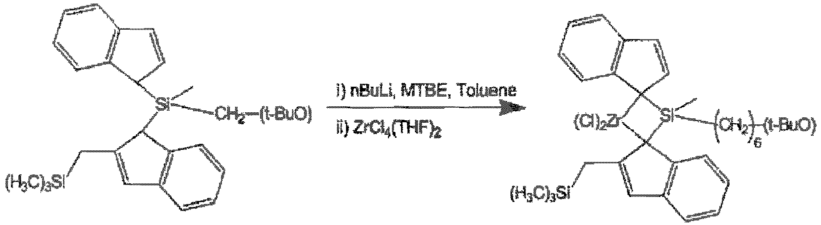

After dissolving 2.6 g (5 mmol) of the ligand compound synthesized in Example 4-1 in 100 mL of toluene and 3 mL of MTBE in a 250 mL Schlenk flask which is dried in an oven, 4.8 mL (12 mmol) of a 2.5 M n-BuLi Hexane solution was added thereto dropwise in a dry ice/acetone bath. The reaction mixture was slowly warmed up to room temperature, and then stirred for 24 hours, followed by lithiation.

1.88 g (5 mmol) of ZrCl₄(THF)₂ was taken in a glove box and injected into another 250 mL Schlenk flask to prepare a suspension having 100 mL of toluene. The above two flasks were cooled down to -78 °C and the lithiated ligand compound was slowly added to the toluene suspension of ZrCl₄(THF)₂. After the completion of the injection, the reaction mixture was slowly warmed up to room temperature, stirred for one day and subjected to reaction. Then, toluene in the mixture was removed up to a volume of about % through vacuum-reduced pressure. Hexane was added in about 5 times volume of the remaining toluene thereto and recrystallized. The mixture was filtered without contacting with the outside air to give a metallocene compound in a dark red powder phase. The resulting filter cake in the upper portion of the filter was washed using a little Hexane, and then weighed in the glove box to identify the synthesis.
¹H NMR (500MHz, CDCl₃): -0.1 (9H, m), 1.12 (9H, m), 1.23 (3H, s). 0.8-1.8 (19H, m), 1.93 (2H, s), 2.1 (1H, s). 3.3 (2H, m), 6.25-6.8 (3H, m), 6.9-7.6 (8H, m)

### Example 5-1: Synthesis of Ligand Compound

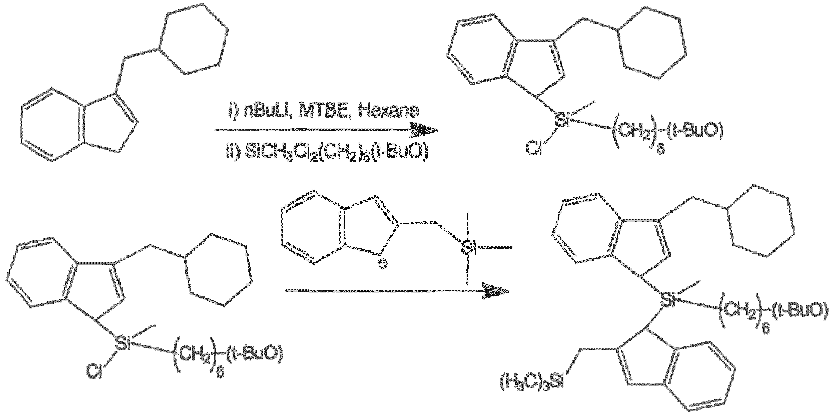

After dissolving 1.06 g (5 mmol) of 3-(cyclohexvlmethyl)-IH-indene in 50 ml of Hexane and 2.4 ml of MTBE, 2.4 mL (6 mmol) of a 2.50 M n-BuLi Hexane solution was added thereto dropwise in a dry ice/acetone bath. The reaction mixture was slowly warmed up to room temperature, and then stirred for 24 hours.

Another 250 mL Schlenk flask was placed in the glove box and weighed 1.36 g (5 mmol) of SiCH₃Cl₂(CH₂)₆(t-BuO) in the glove box. And it was taken out of the glove box, dissolved in 100 mL of Hexane, and then the mixture prepared above was added thereto dropwise in a dry ice/acetone bath (Synthesized Compound 5-1),

Separately, after dissolving 1.01 g (5 mmol) of ((1H-inden-2-yl)methyl)trimethylsi lane of the Preparation Example 1 in 80 ml of THF, 2.4 mL (6 mmol) of a 2.50 M n-BuLi Hexane solution was added thereto dropwise in a dry ice/acetone bath. The reaction mixture was slowly warmed up to room temperature, and then stirred for 24 hours (Synthesized Compound 5-2),

After the Synthesized Composition 5-2 was added to the Synthesized Composition 5-1 dropwise in a dry ice/acetone bath, the reaction mixture was slowly warmed up to room temperature, and then stirred for 24 hours.

50 mL of water was added thereto, and the organic layer was extracted three times with 50 mL of ether. An appropriate amount of MgSO₄ was added to the collected organic layer, stirred for a while, filtered, and the solvent was dried under reduced pressure to obtain 3.03 g (4.96 mmol) of a ligand compound in an oil phase, which was confirmed by ¹H-NMR.

The obtained ligand compound was used for the preparation of the metallocene compound.
¹H NMR (500MHz, CDCl₃): -0.01 (3H, d), 0.04 (9H, s), 1.2 (9H, s), 0.8-1.8 (20H, m), 1.96 (2H, s), 3.26 (2H, s). 3.46 (1H, m), 3.57 (1H, m), 6.3 (1H, s), 6.43 (1H, s), 7.03-7.46 (8H, m)

### Example 5-2: Synthesis of Metallocene Compound

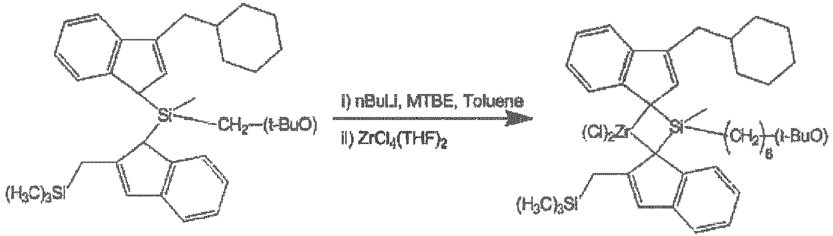

After dissolving 3.03 g (4.94 mmol) of the ligand compound synthesized in Example 5-1 in 80 mL of toluene and 2.6 mL of MTBE in a 250 mL Schlenk flask which is dried in an oven, 4.4 mL (10.8 mmol) of a 2.5 M n-BuLi Hexane solution was added thereto dropwise in a dry ice/acetone bath. The reaction mixture was slowly warmed up to room temperature, and then stirred for 24 hours, followed by lithiation.

1.86 g (4.94 mmol) of ZrCl₄(THF)₂ was taken in a glove box and injected into another 250 mL Schlenk flask to prepare a suspension having 100 mL of toluene. The above two flasks were cooled down to -78 °C and the lithiated ligand compound was slowly added to the toluene suspension of ZrCl₄(THF)₂. After the completion of the injection, the reaction mixture was slowly warmed up to room temperature, stirred for one day and subjected to reaction. Then, toluene in the mixture was removed up to a volume of about & through vacuum-reduced pressure. Hexane was added in about 5 times volume of the remaining toluene thereto and recrystallized. The mixture was filtered without contacting with the outside air to give a metallocene compound in a brown solid phase. The resulting filter cake in the upper portion of the filter was washed using a little Hexane, and then weighed in the glove box to identify the synthesis (yield: 66%),
¹H NMR (500MHz, CDCl₃): -0.14 (9H, s), -0.03 (3H, d). 1.15 (9H, s), 0.47-1.58 (20H, m), 1.48 (2H, s), 1.84 (2H, s), 3.33 (2H, m), 3.57 (1H, m), 5.62 (2H, s), 6.8-7.6 (8H, m)

### <Examples of Olefin Polymerization>

### Polymerization of Ethylene

A 100 mL Andrew bottle was prepared and assembled with an impeller part, and then air in the bottle was replaced by argon in a glove box. After adding 70 mL of toluene containing a small amount of TMA to the Andrew bottle, 10 mL of an MAO (10 wt% in toluene) solution was added thereto. 5 mL of a catalyst/toluene solution (5 µmol of catalyst), which was prepared by dissolving the metallocene compound of the Examples in toluene, was injected into the Andrew bottle. While the Andrew bottle was immersed in an oil bath heated to 90°C, the top of the bottle was fixed to a mechanical stirrer, and then, the reaction solution was stirred for 5 minutes until it reached to 90°C. The air in the bottle was purged with ethylene gas 3 times, and pressure was slowly raised up to 446 kPa (50 psig) by opening an ethylene valve. The reaction was allowed to continue for 30 min while operating the mechanical stirrer at 500 rpm while maintaining the pressure by continuously providing ethylene of as much as was consumed. When the reaction was completed, the gas in the reactor was slowly vented after locking the ethylene valve and stopping agitation. 400 mL of the reactant was poured into a mixed solution of ethanol/HCl aqueous solution, and the solution was stirred for about 1 hour, and then, filtered to obtain polymer, which was dried in a vacuum oven of 60°C for 20 hours. The obtained polymer was weighed to calculate the activity of the catalyst, and 10 mg of the sample was taken and used for GPC analysis.

### Copolymerization of Ethylene-l-Hexene

A 100 mL Andrew bottle was prepared and assembled with an impeller part, and then air in the bottle was replaced by argon in a glove box. After adding 70 mL of toluene containing a small amount of TMA to the Andrew bottle, 10 mL of an MAO (10 wt% in toluene) solution was added thereto. 5 mL of a catalyst/toluene solution (5 µmol of catalyst), which was prepared by dissolving the metallocene compound of the Examples in toluene, was injected into the Andrew bottle. While the Andrew bottle was immersed in an oil bath heated to 90°C, the top of the bottle was fixed to a mechanical stirrer, and then, the reaction solution was stirred for 5 minutes until it reached to 90°C. 5 mL of comonomer 1-hexen was injected, the inside of the bottle was purged three times with ethylene gas, and then, the ethylene valve was opened to slowly pressurize. Ethylene was continuously supplied as much as consumed ethylene so as to maintain pressure, and the mechanical stirrer was operated to react at 500 rpm for 30 minutes. After the reaction was completed, temperature was lowered to room temperature, and the ethylene valve was closed and stirring was discontinued, and then, the pressure inside the reactor was slowly vented. 400 mL of the reactant was poured into a mixed solution of ethanol/HCl aqueous solution, and the solution was stirred for about 1 hour, and then, filtered to obtain polymer, which was dried in a vacuum _ oven of 60°C for 20 hours. The obtained polymer was weighed to calculate the activity of the catalyst, and 10 mg of the sample was taken and used for GPC analysis.

The polymerization process conditions and analysis results of the Polymerization Examples are given in the following Table 1.

**[Table 1]**

| | Catalyst | 1-Hex (mL) | Activity*^{b}* (X10⁶) | Mw*^{c}* (g/mol) | PDI*^{C}* | Branch (1-Hx mol%) |
|---|---|---|---|---|---|---|
| Polymerization Example 1 | Example 1-2 | | 4.6 | 260,000 | 4.3 | |
| | | 5 | 5.0 | 210,000 | 4.7 | 5.6 |
| Polymerization Example 2 | Example 2-2 | | 5.1 | 410,000 | 5.6 | |
| | | 5 | 5.4 | 420,000 | 5.1 | 5.9 |
| Polymerization Example 3 | Example 3-2 | | 4.8 | 170,000 | 3.0 | |
| | | 5 | 5 . 0 | 190,000 | 3.4 | 6.1 |
| Polymerization Example 4 | Example 4-2 | | 5.2 | 1.10,000 | 4.2 | |
| | | 5 | 5.6 | 150,000 | 3.8 | 6.4 |
| Polymerization Example 5 | Example 5-2 | | 8.3 | 210,000 | 3.4 | |
| | | 5 | 8.2 | 190,000 | 5.7 | 6.2 |
| | a Conditions: amount of catalyst (5 µ mol), Ethylene pressureCPE-446 kPa (50psig)), AI/Zr=3000, Temperature: 90°C, reaction time 30min. *b* g/mol · hr c GPC | | | | | |

Referring to Table 1, in the case of the polymerization examples using the metallocene compound of the present disclosure as a catalyst, it is confirmed that an ethylene polymer having a generally high weight average molecular weight is obtained. In particular as an indenyl group having a trimethylsilyl group at the 2-position carbon exists only on one side of the metallocene compound molecule, it can be confirmed that the incorporation of 1-hexene is high.

## Claims

1. A metallocene compound represented by 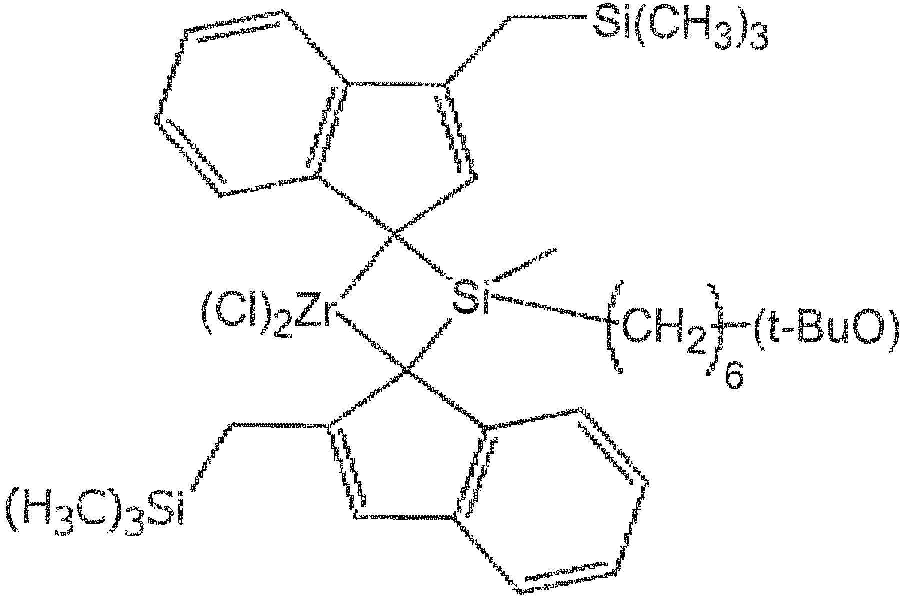 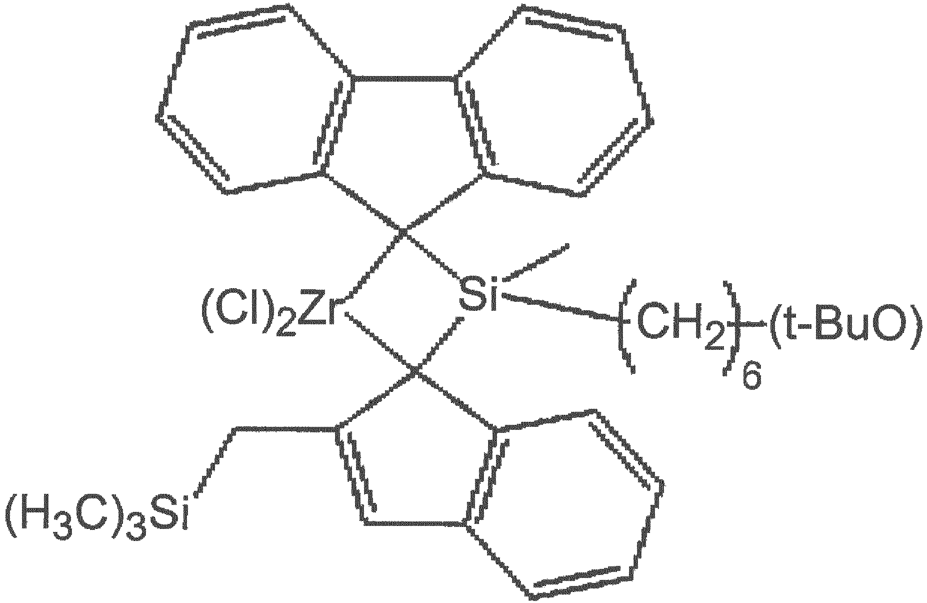 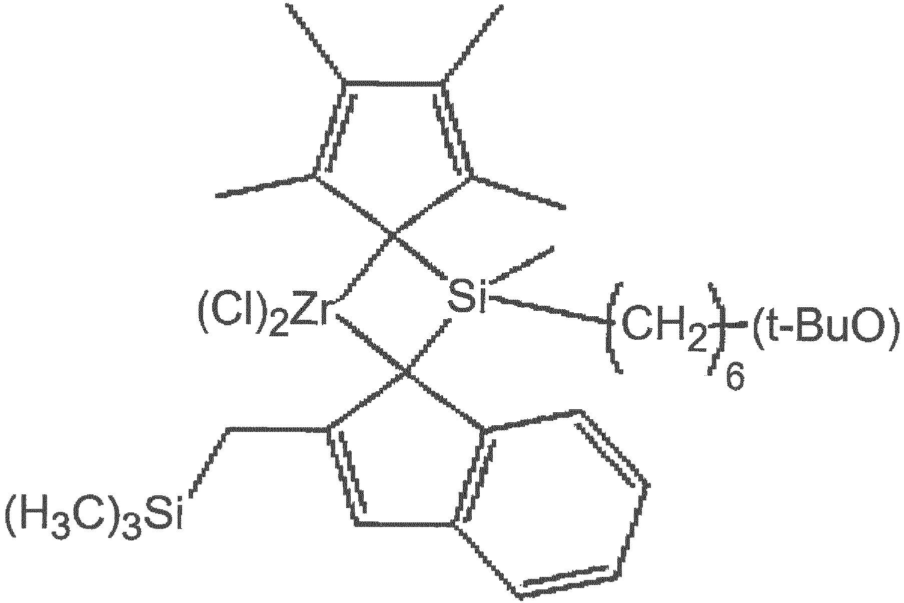 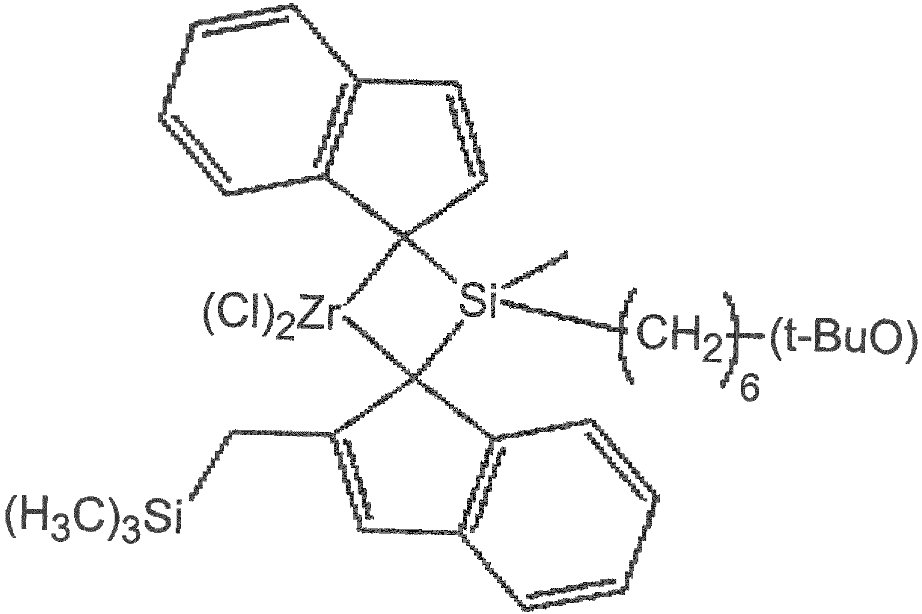 or

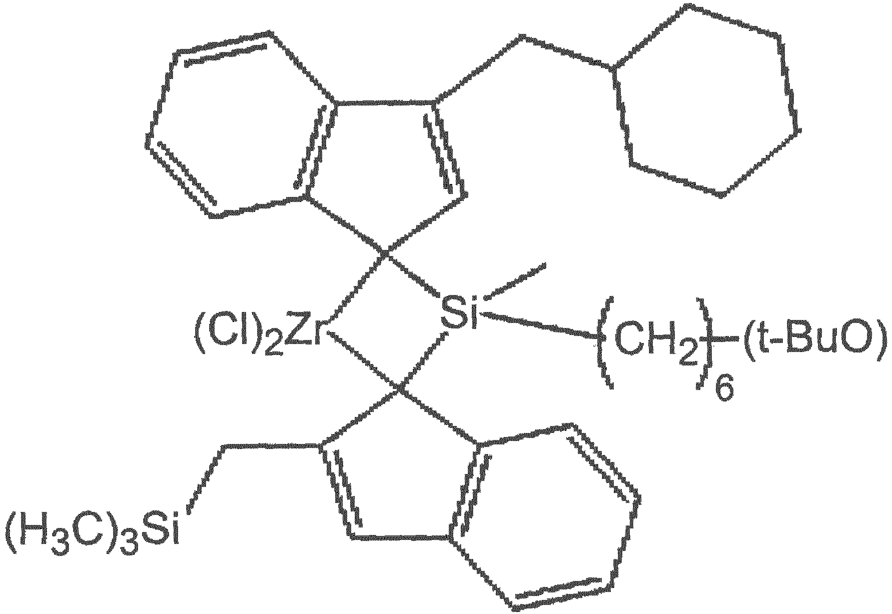

2. A method of preparing an ethylene copolymer using the metallocene compound of claim 1, wherein polymerization is carried out at a temperature of 25-500°C and at a pressure of 98.1 to 9810 kPa (1 to 100 kgf/cm²) for 1 to 24 hours, and wherein the ethylene copolymer is an ethylene-1-hexene copolymer.

## Patentansprüche

1. Metallocen-Verbindung, dargestellt durch 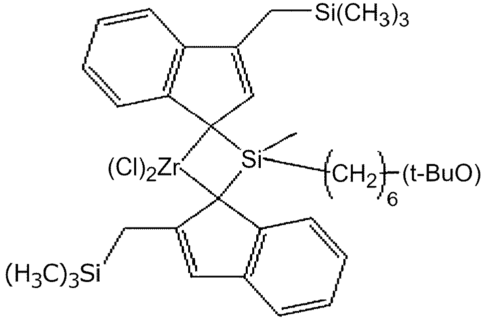 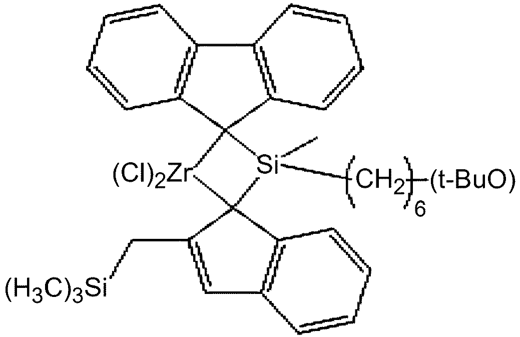 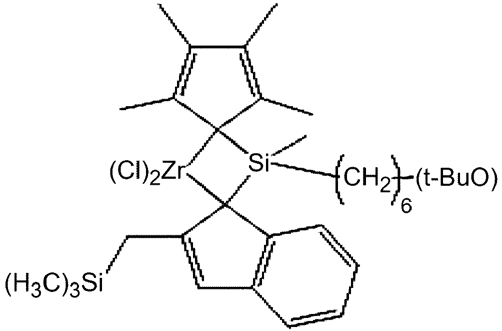 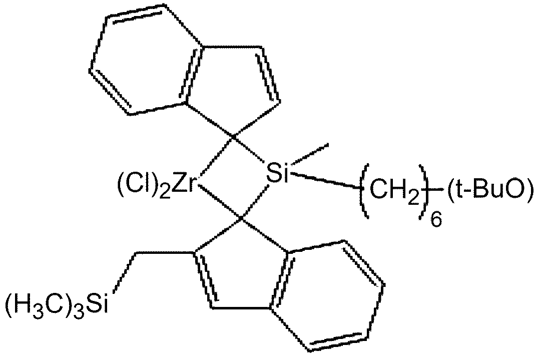 oder

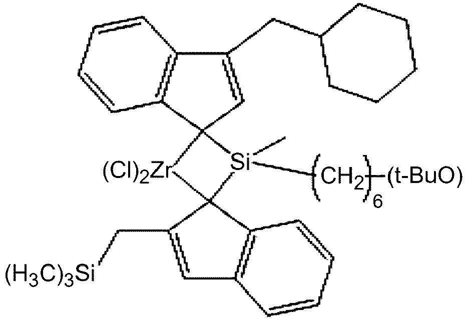

2. Verfahren zum Herstellen eines Ethylencopolymers unter Verwendung der Metallocen-Verbindung nach Anspruch 1, wobei Polymerisation bei einer Temperatur von 25-500°C und bei einem Druck von 98,1 bis 9810 kPa (1 bis 100 kgf/cm²) für 1 bis 24 Stunden durchgeführt wird, und wobei das Ethylencopolymer ein Ethylen-i-hexen-Copolymer ist.

## Revendications

1. Composé métallocène représenté par

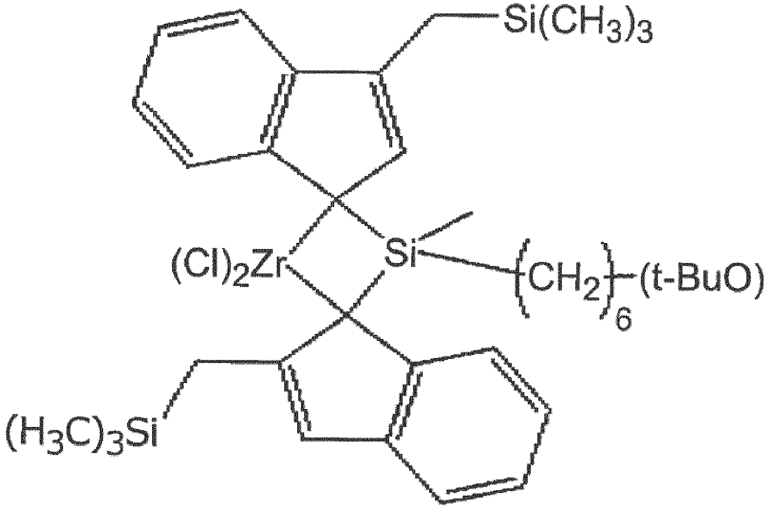

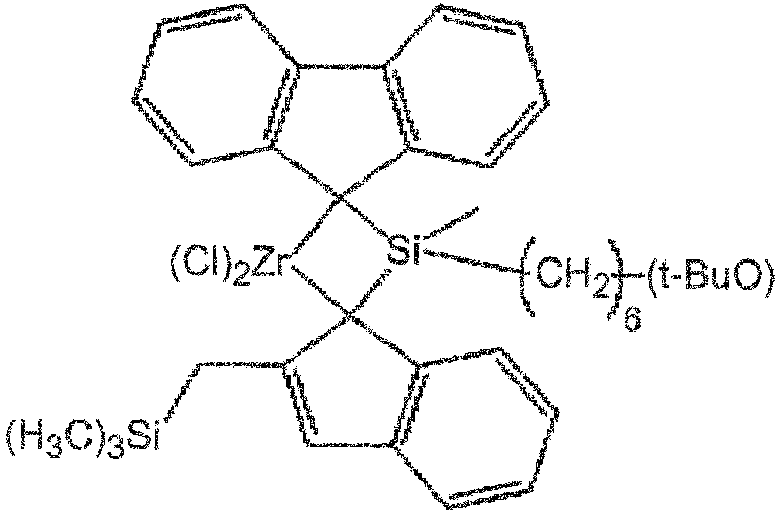

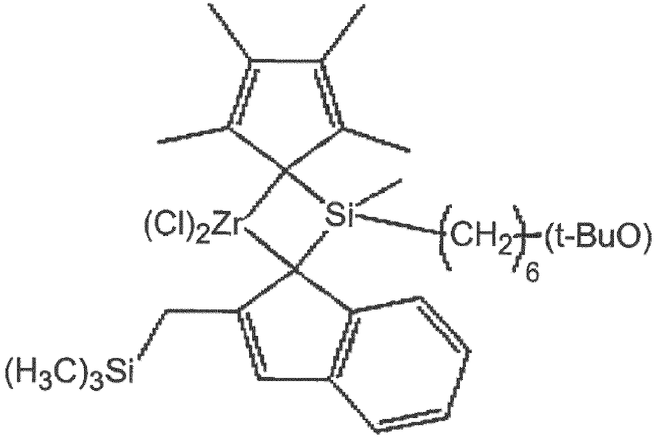

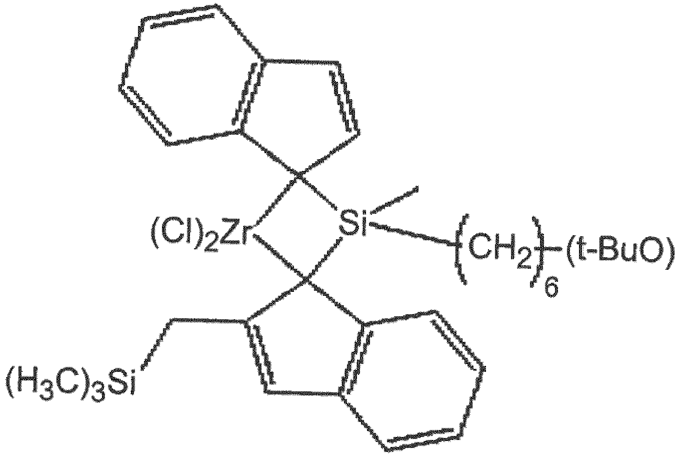

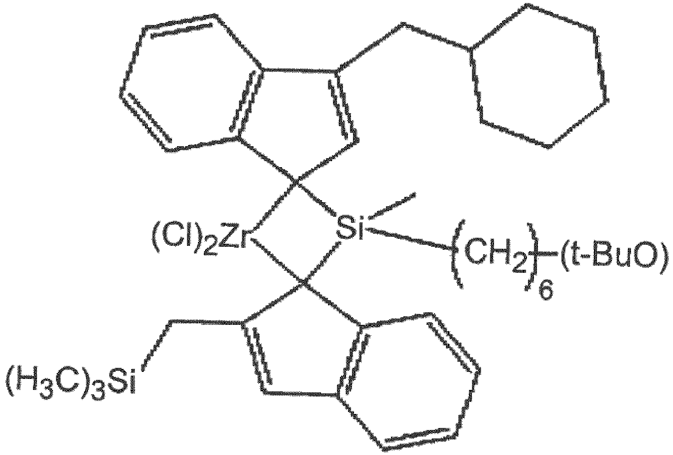

2. Procédé de préparation d'un copolymère d'éthylène en utilisant le composé métallocène de la revendication 1, dans lequel la cristallisation est mise en oeuvre à une température de 25 à 500 °C et à une pression de 98,1 à 9810 kPa (1 à 100 kg/cm²) pendant 1 à 24 heures, et dans lequel le copolymère d'éthylène est un copolymère d'éthylène-1-hexène.
